# EUROPEAN PATENT APPLICATION

(11) **EP 4 057 378 A1**
(43) Date of publication of application: **14.09.2022**
(21) Application number: 22161599.0
(22) Date of filing: 11.03.2022
(51) Int. Cl.: H01M 4/04, H01M 4/36, H01M 4/525, H01M 4/62, H01M 10/0525, H01M 4/02

(54) **CATHODE ACTIVE MATERIAL FOR LITHIUM SECONDARY BATTERY AND METHODE OF MANUFACTURING THE SAME**

(30) Priority: 11.03.2021 KR 20210031863
(71) Applicant: SK On Co., Ltd., Seoul 03188 (KR)
(72) Inventor: CHOI, Jae Ho, 34124 Daejeon (KR); KIM, Sang Bok, 34124 Daejeon (KR); KIM, Jik Soo, 34124 Daejeon (KR); KWAK, Hyo Shin, 34124 Daejeon (KR); KIM, Myoung Lae, 34124 Daejeon (KR); LEE, Joo Hyun, 34124 Daejeon (KR)
(74) Representative: Stolmár & Partner Patentanwälte PartG mbB

(57) **Abstract**

The present invention provides a cathode active material for a lithium secondary battery and a method of manufacturing the same. The cathode active material for a lithium secondary battery according to exemplary embodiments includes a lithium metal oxide particle and a water-soluble polymer, and may have a secondary particle structure in which the lithium metal oxide particle and the water-soluble polymer are aggregated.

## Description

### [BACKGROUND OF THE INVENTION]

### 1. Field of the Invention

The present invention relates to a cathode active material for a lithium secondary battery and a method of manufacturing the same, and more particularly, to a lithium metal oxide-based cathode active material for a lithium secondary battery and a method of manufacturing the same.

### 2. Description of the Related Art

A secondary battery is a battery which can be repeatedly charged and discharged. With rapid progress of information and communication, and display industries, the secondary battery has been widely applied to various portable telecommunication electronic devices such as a camcorder, a mobile phone, a laptop computer as a power source thereof. Recently, a battery pack including the secondary battery has also been developed and applied to an eco-friendly automobile such as a hybrid vehicle as a power source thereof.

Examples of the secondary battery may include a lithium secondary battery, a nickel-cadmium battery, a nickel-hydrogen battery and the like. Among them, the lithium secondary battery has a high operating voltage and a high energy density per unit weight, and is advantageous in terms of a charging speed and light weight, such that development thereof has been proceeded in this regard.

The lithium secondary battery may include: an electrode assembly including a cathode, an anode, and a separation membrane (separator); and an electrolyte in which the electrode assembly is impregnated. In addition, the lithium secondary battery may further include, for example, a pouch-shaped outer case in which the electrode assembly and the electrolyte are housed.

As an active material for a cathode of a lithium secondary battery, a lithium metal oxide may be used. Examples of the lithium metal oxide may include a nickel-based lithium metal oxide.

A lithium secondary battery having longer life-span, high capacity, and operational stability is required as the application range thereof is expanded. In the lithium metal oxide used as the active material for a cathode, when non-uniformity in the chemical structure is caused due to precipitation of lithium, etc., it may be difficult to implement a lithium secondary battery having desired capacity and life-span. In addition, when a deformation or damage of the lithium metal oxide structure is caused during repeated charging and discharging, life-span stability and capacity maintenance properties may be reduced.

For example, Korean Patent Registration Publication No. 10-0821523 discloses a method of removing lithium salt impurities by washing a lithium composite metal oxide with water, but there is a limitation in sufficient removal of the impurities, and damage to the surface of particles may be caused in a water washing process.

### [Prior Art Document]

### [Patent Document]

(Patent Document) Korean Patent Registration Publication No. 10-0821523

### [SUMMARY OF THE INVENTION]

An object of the present invention is to provide a cathode active material for a lithium secondary battery having improved operational stability and electrical properties.

In addition, another object of the present invention is to provide a method of manufacturing a cathode active material for a lithium secondary battery having improved operational stability and electrical properties.

Further, another object of the present invention is to provide a lithium secondary battery including the cathode active material having improved operational stability and electrical properties.

To achieve the above objects, according to an aspect of the present invention, there is provided a cathode active material for a lithium secondary battery including: a lithium metal oxide particle core part; and a water-soluble polymer coating layer configured to cover at least a portion of the core part, wherein the water-soluble polymer comprises at least one of a cationic polymer (polycation) and an anionic polymer (polyanion).

In some embodiments, the core part may include a lithium metal oxide secondary particle, and the water-soluble polymer may be distributed at a boundary between lithium metal oxide primary particles.

In some embodiments, the cationic polymer may include a repeating unit of Structural Formula 1 below:

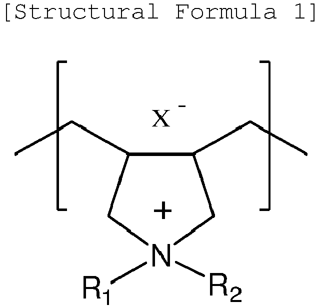

(In Structural Formula 1, R1 and R2 are each independently a hydrogen atom, or a hydrocarbon group having 1 to 5 carbon atoms, R1 and R2 can be bonded to each other to form a ring, and X is any one of halogen atoms).

In some embodiments, the cationic polymer may include a repeating unit of Structural Formula 2 below:

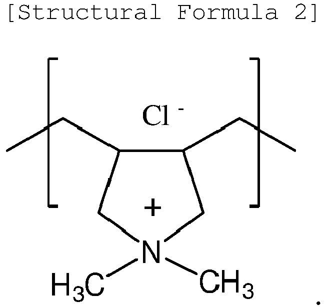

In some embodiments, the anionic polymer may include a repeating unit of Structural Formula 3 below:

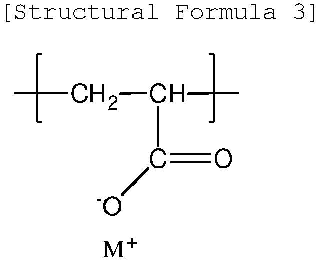

(In Structural Formula 3, M is any one of alkali metal elements).

In some embodiments, the lithium metal oxide particles may include a lithium nickel-based metal oxide represented by Formula 1 below:

[Formula 1] LiₓNi_{y}M_{1-y}O₂

(In Formula 1, x and y are in a range of 0.9<x<1.2, y≥0.5, respectively, and M is at least one element selected from the group consisting of Co, Mn, Al, Zr, Ti, B, Mg and Ba).

In some embodiments, in Formula 1, y may be in a range of 0.6≤y≤0.93.

In some embodiments, in Formula 1, M may include Co and Mn.

In some embodiments, the lithium metal oxide particle may include a doping or coating including at least one of Al, Zr and Ti.

In addition, according to another aspect of the present invention, there is provided a method of manufacturing a cathode active material for a lithium secondary battery, the method including: preparing a lithium metal oxide particle; and washing the lithium metal oxide particle with a cleaning solution including a water-soluble polymer, wherein the water-soluble polymer includes at least one of a cationic polymer (polycation) and an anionic polymer (polyanion).

In some embodiments, the water-soluble polymer may be added in an amount of 0.2 to 3 wt.% based on a total weight of the lithium metal oxide particle.

In some embodiments, the method may further include mixing the lithium metal oxide particle with at least one of Al2O3, ZrO2 and TiO2 and performing a heat treatment to form a coating before the washing the lithium metal oxide particle with the cleaning solution.

Further, according to another aspect of the present invention, there is provided a cathode including a cathode active material layer which includes the above-described cathode active material for a lithium secondary battery; and an anode disposed to face the cathode.

According to embodiments of the present invention, the water-soluble polymer including at least one of the cationic polymer and the anionic polymer may be distributed at the boundary of the lithium metal oxide primary particles to form a bond between the particles. Thereby, it is possible to suppress damage to the surface of the lithium metal oxide particles to increase structural stability, and significantly improve capacity/output retention properties of the cathode active material.

According to embodiments of the present invention, the cathode active material may be introduced through a cleaning process using a cleaning solution including the water-soluble polymer. Thereby, impurities such as lithium salt precipitates remaining on the surface of the lithium metal oxide particles may be removed, and a cathode active material for a lithium secondary battery having a stable secondary particle structure in which the water-soluble polymer is bonded between the lithium metal oxide primary particles may be formed.

### [BRIEF DESCRIPTION OF THE DRAWINGS]

The above and other objects, features and other advantages of the present invention will be more clearly understood from the following detailed description taken in conjunction with the accompanying drawings, in which:
FIGS. 1 and 2 are a schematic plan view and a cross-sectional view of a lithium secondary battery according to exemplary embodiments, respectively;
FIGS. 3 to 5 are SEM images of cathode active materials according to exemplary examples and comparative examples; and
FIG. 6 is a graph illustrating measured results of capacity retention rate during life-span of the lithium secondary batteries according to the exemplary examples and comparative examples.

### [DETAILED DESCRIPTION OF THE INVENTION]

### <Cathode active material for lithium secondary battery and method of manufacturing the same>

A cathode active material for a lithium secondary battery (hereinafter, may be abbreviated as a "cathode active material") according to exemplary embodiments may include a lithium metal oxide particle core part and a water-soluble polymer coating layer which covers at least a portion of the core part.

As used herein, the term "lithium metal oxide" refers to a composite oxide including lithium and at least one metal other than lithium. According to exemplary embodiments, the lithium metal oxide particle may include a lithium nickel-based metal oxide.

For example, the lithium nickel-based metal oxide may be represented by Formula 1 below.

[Formula 1] LiₓNi_{y}M_{1-y}O₂

In Formula 1, x and y may be in a range of 0.9<x<1.2 and y≥0.5, respectively, and M may be at least one element selected from the group consisting of Co, Mn, Al, Zr, Ti, B, Mg and Ba.

Nickel (Ni) may be provided as a metal associated with a capacity of the lithium secondary battery. For example, the higher the content of nickel, the better the capacity and output of the lithium secondary battery.

In some embodiments, in Formula 1, y may be in a range of 0.6≤y≤0.93 in order to implement a high-capacity and high-output cathode active material.

In order to compensate stable electrical conductivity and chemical stability according to a high-content of nickel, M may include cobalt (Co) and manganese (Mn). For example, cobalt (Co) may be a metal associated with conductivity or resistance of the lithium secondary battery. In one embodiment, manganese (Mn) may be provided as a metal associated to mechanical and electrical stability of the lithium secondary battery.

Accordingly, the lithium metal oxide particles may include a nickel-cobalt-manganese-based lithium oxide, and a cathode active material having improved capacity, output, low resistance, and life-span stability may be provided.

In some embodiments, the lithium metal oxide particles may further include a doping or coating other than Ni, Co and Mn. For example, the doping or coating may contain an element of Al, Zr and/or Ti, and preferably contains all elements of Al, Zr and Ti.

In the nickel-cobalt-manganese-based lithium oxide, a content of the doping or coating element may be about 0.1 to 1 mol% based on a total number of moles of Ni, Co, Mn and doping elements (e.g., Al, Zr and/or Ti), and preferably about 0.5 to 1 mol%. Within the above range, chemical and structural stability may be further improved without excessive reduction in activity of the lithium metal oxide particles.

The coating may be derived from a metal oxide for coating such as Al₂O₃, ZrO₂ and/or TiO₂. The metal oxide for coating, which is added to form a coating on the particle, may be added in an amount of about 0.5 to 1% by weight ('wt.%') based on a total weight of the nickel-cobalt-manganese-based lithium oxide.

In some embodiments, the lithium metal oxide particle may have a layered structure. For example, lithium nickel-based metal oxide primary particles may be aggregated while forming a layered structure to form the lithium metal oxide particle as a cathode active material. Mobility of lithium ions generated in the cathode active material may be further improved through the particle structure.

As used herein, the term "water-soluble polymer" is a type of polymer in which unit bodies are repeatedly linked, and is used as a meaning of encompassing a resin or polymer material that may be dissolved in water, swelled, or dispersed into small particles.

In some embodiments, the water-soluble polymer may include at least one of a cationic polymer (polycation) and an anionic polymer (polyanion).

In some embodiments, the core part may include a lithium metal oxide secondary particle, and the water-soluble polymer may be distributed at a boundary between lithium metal oxide primary particles.

As used herein, the term "cationic polymer" is used as a meaning of encompassing a polymer material including a cationic functional group in a polymer chain.

As used herein, the term "anionic polymer" is used as a meaning of encompassing a polymer material including an anionic functional group in a polymer chain.

In some embodiments, the cationic polymer may include a structure of Structural Formula 1 below.

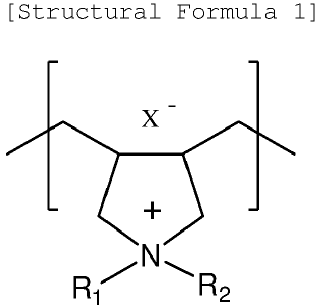

In Structural Formula 1, R₁ and R₂ may be each independently a hydrogen atom, or a hydrocarbon group having 1 to 5 carbon atoms, R₁ and R₂ may be bonded to each other to form a ring, and X may be any one of halogen atoms.

As used herein, the term "hydrocarbon group" may include a cyclic aliphatic group, a linear aliphatic group, a branched aliphatic group, or a combination thereof. For example, the hydrocarbon group may include an alkyl group (e.g., 1 to 5 carbon atoms), an alkenyl group (e.g., 2 to 5 carbon atoms), or a cycloalkyl group (e.g., 3 to 5 carbon atoms). For example, when the carbon atom exceeds 5, water solubility of the polymer may be reduced, and the formation of a secondary particle structure in which lithium metal oxide particles and the water-soluble polymer compound are aggregated may be inhibited.

In some embodiments, R₁ and R₂ may be fused to each other to form a ring. For example, R₁ and R₂ may be fused to each other to form a heterocycle (e.g., a cyclic ether).

In some embodiments, the cationic polymer may include Structural Formula 2 below.

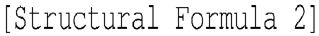

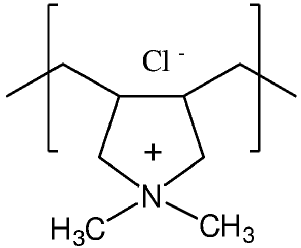

In some embodiments, the anionic polymer may include a structure of Structural Formula 3 below.

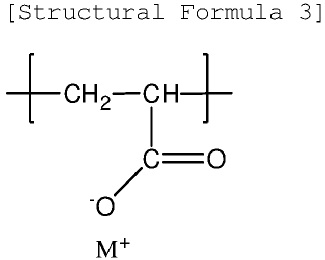

The above-described water-soluble polymer including at least one of the cationic polymer and anionic polymer may act as a coagulant for forming a bond between the lithium metal oxide particles. In this case, it is possible to improve the life-span properties along with the improvement of rate properties and the initial efficiency of the lithium secondary battery.

In an exemplary embodiment, the water-soluble polymer may have a weight average molecular weight of about 10,000 to 500,000.

In addition, as described above, when the lithium metal oxide particle includes an additional metal doping or coating, chemical stability of the cathode active material may be further improved by bonding the metal doping or coating with the water-soluble polymer.

Hereinafter, a method of manufacturing the cathode active material will be described in more detail.

According to exemplary embodiments, the lithium metal oxide particles may be prepared by reacting a lithium precursor and a nickel precursor. The lithium precursor and the nickel precursor may include oxides or hydroxides of lithium and nickel, respectively. For example, the preliminary lithium metal oxide may be obtained by reacting the lithium precursor with the nickel precursor in a solution through a precipitation reaction such as a co-precipitation method.

In some embodiments, other metal precursors (e.g., cobalt precursor, manganese precursor, etc.) other than the lithium precursor and the nickel precursor may be used together and reacted. In some embodiments, the lithium precursor and a nickel-cobalt-manganese precursor (e.g., nickel-cobalt-manganese hydroxide) may be used together.

The other metal precursors may include Al, Zr and/or Ti precursors other than the cobalt precursor and the manganese precursor in consideration of doping formation.

In some embodiments, after preparing the lithium metal oxide particles, a calcination process may be further performed. For example, the calcination process may be performed at a temperature of about 600 to 1,000°C. The layered structure of the lithium metal oxide particles may be stabilized, and the doping element may be fixed by the calcination process.

In some embodiments, after mixing the prepared lithium metal oxide particles with the metal oxide for coating such as Al₂O₃, ZrO₂ and/or TiO₂, a coating may be formed through additional heat treatment.

Unreacted precursors may remain or be deposited on the surface of the lithium metal oxide particles synthesized through the above-described precursor reaction. In addition, impurities and solution molecules may remain on the lithium metal oxide particles in the synthesis process.

In some embodiments, in order to improve a yield of the lithium metal oxide particles or stabilize the synthesis process, the lithium precursor may be used in an excess amount. In this case, lithium salt impurities including lithium hydroxide (LiOH) and lithium carbonate (Li₂CO₃) may remain on the surface of the preliminary lithium metal oxide.

According to exemplary embodiments, the lithium metal oxide particle may be cleaned or washed using a cleaning solution including the water-soluble polymer which includes at least one of the cationic polymer and anionic polymer described above.

The lithium salt impurities may be removed by the cleaning solution. In addition, damage to the surface of the lithium metal oxide particle may be minimized by the water-soluble polymer included in the cleaning solution. In the comparative example, when performing the washing process using water, the lithium salt impurities may be removed, but oxidation of the surface of the lithium metal oxide particles and a side reaction with water may be caused, thereby resulting in damage or collapse of the layered structure of the cathode active material.

However, according to exemplary embodiments, the surface of the lithium metal oxide particle may be protected by performing the cleaning process using the cleaning solution including the water-soluble polymer. In addition, the water-soluble polymer may act as a coagulant to form a bond between the lithium metal oxide particles, thereby forming a secondary structure in which the lithium metal oxide particles and the water-soluble polymer are aggregated. Accordingly, it is possible to improve battery properties such as an initial efficiency, and initial discharge amount of the cathode active material.

In some embodiments, the water-soluble polymer may be added in an amount of about 0.2 to 3 wt.% based on a total weight of the lithium metal oxide particle. Within the above range, it is possible to sufficiently obtain effects of removing lithium salt impurities or protecting the surface of the particles without excessively inhibiting the activity of the metal included in the cathode active material. In addition, within the above range, it is possible to stably form the secondary structure in which the lithium metal oxide particles and the water-soluble polymer are aggregated.

Preferably, the water-soluble polymer is added in an amount of about 0.5 to 1.5 wt.% based on the total weight of the lithium metal oxide particles.

In some embodiments, the cleaning solution may be prepared by adding the water-soluble polymer to water.

In some embodiments, a drying process may be further performed after the washing process. The water-soluble polymer may be fixed or stabilized between the lithium metal oxide particles through the drying process.

### <Lithium secondary battery>

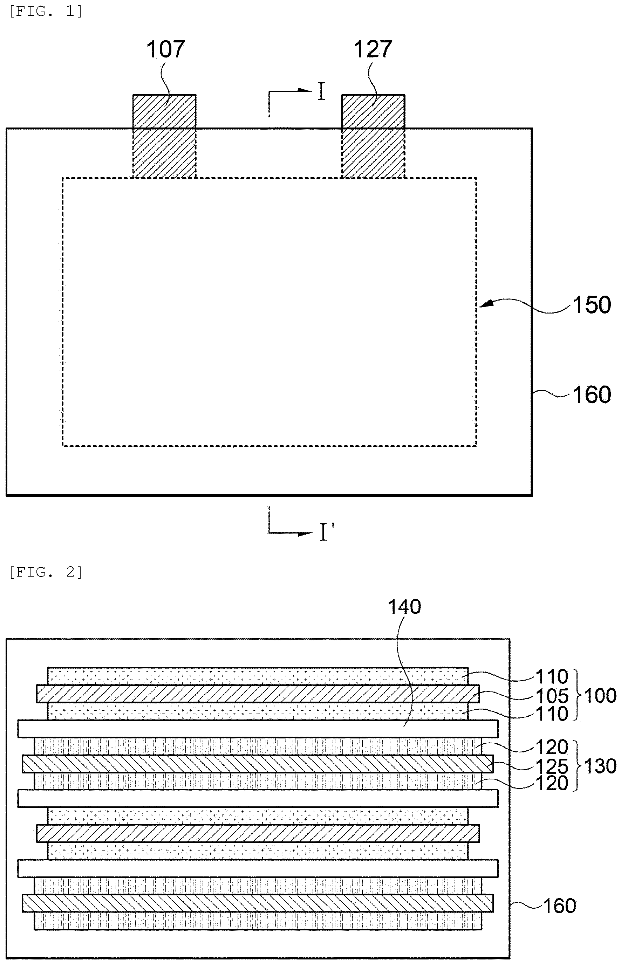

FIGS. 1 and 2 are a schematic plan view and a cross-sectional view of a lithium secondary battery according to exemplary embodiments, respectively.

Hereinafter, a lithium secondary battery including a cathode including the cathode active material for a lithium secondary battery described above will be described with reference to FIGS. 1 and 2.

Referring to FIGS. 1 and 2, the lithium secondary battery may include a cathode 100 including a cathode active material layer which includes the above-described cathode active material for a lithium secondary battery and an anode 130 disposed to face the cathode.

The cathode 100 may include a cathode active material layer 110 formed by applying the above-described cathode active material including lithium metal oxide particles which includes the water-soluble polymer compound to a cathode current collector 105.

For example, a slurry may be prepared by mixing the lithium metal oxide particles including the water-soluble polymer compound with a binder, a conductive material and/or a dispersing material in a solvent, followed by stirring the same. The slurry may be coated on the cathode current collector 105, followed by compressing and drying to manufacture the cathode.

The cathode current collector 105 may include, for example, stainless steel, nickel, aluminum, titanium, copper or an alloy thereof, preferably aluminum or an aluminum alloy.

The binder may be selected from, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a cathode forming binder. In this case, an amount of the binder for forming the cathode active material layer 110 may be reduced and an amount of the cathode active material may be relatively increased, thereby improving the output and capacity of the secondary battery.

The conductive material may be included to facilitate electron transfer between the active material particles. For example, the conductive material may include a carbon-based conductive material such as graphite, carbon black, graphene, or carbon nanotubes and/or a metal-based conductive material including tin, tin oxide, titanium oxide, or a perovskite material such as LaSrCoO₃, and LaSrMnO₃.

The anode 130 may include an anode current collector 125 and an anode active material layer 120 formed by coating the anode current collector 125 with an anode active material.

The anode active material useable in the present invention may include any material known in the related art, so long as it can intercalate and deintercalate lithium ions, without particular limitation thereof. For example, carbon-based materials such as crystalline carbon, amorphous carbon, carbon composite, carbon fiber, etc.; a lithium alloy; silicon or tin may be used. Examples of the amorphous carbon may include hard carbon, cokes, mesocarbon microbead (MCMB) calcined at a temperature of 1500°C or lower, mesophase pitch-based carbon fiber (MPCF) or the like. Examples of the crystalline carbon may include graphite-based carbon such as natural graphite, artificial graphite, graphite cokes, graphite MCMB, graphite MPCF or the like. Other elements included in the lithium alloy may include, for example, aluminum, zinc, bismuth, cadmium, antimony, silicone, lead, tin, gallium, indium or the like.

The anode current collector 125 may include, for example, gold, stainless steel, nickel, aluminum, titanium, copper, or an alloy thereof, and preferably includes copper or a copper alloy.

In some embodiments, a slurry may be prepared by mixing the anode active material with a binder, a conductive material and/or a dispersing material in a solvent, followed by stirring the same. The anode current collector may be coated with the slurry, followed by compressing and drying to manufacture the anode 130.

As the binder and the conductive material, materials which are substantially the same as or similar to the above-described materials may be used. In some embodiments, the binder for forming the anode may include, for example, an aqueous binder such as styrene-butadiene rubber (SBR) for consistency with the carbon-based active material, and may be used together with a thickener such as carboxymethyl cellulose (CMC).

A separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fiber having a high melting point, polyethylene terephthalate fiber or the like.

According to exemplary embodiments, an electrode cell is defined by the cathode 100, the anode 130, and the separation membrane 140, and a plurality of electrode cells are laminated to form, for example, a jelly roll type electrode assembly 150. For example, the electrode assembly 150 may be formed by winding, lamination, folding, or the like of the separation membrane 140.

The electrode assembly 150 may be housed in a case 160 together with an electrolyte to define the lithium secondary battery. According to exemplary embodiments, a non-aqueous electrolyte may be used as the electrolyte.

The non-aqueous electrolyte includes a lithium salt of an electrolyte and an organic solvent, and the lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulforane, γ-butyrolactone, propylene sulfite, tetrahydrofurane, and the like may be used. These compounds may be used alone or in combination of two or more thereof.

As shown in FIG. 2, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

The lithium secondary battery may be manufactured, for example, in a cylindrical shape using a can, a square shape, a pouch type or a coin shape.

According to exemplary embodiments, it is possible to implement a lithium secondary battery having improved life-span and long-term stability while suppressing a decrease in capacity and average voltage due to the improved chemical stability of the cathode active material by addition of the water-soluble polymer.

Hereinafter, specific experimental examples are proposed to facilitate understanding of the present invention. However, the following examples are only given for illustrating the present invention and those skilled in the art will obviously understand that various alterations and modifications are possible within the scope and spirit of the present invention. Such alterations and modifications are duly included in the appended claims.

### Examples and Comparative Examples

In examples and comparative examples, lithium metal oxide having a composition (Li [Ni_{0.88}Co_{0.11}Mn_{0.06}]O₂ described in Table 1 below was used. In a cleaning process, pure water (de-ionized water, DIW) having a specific resistance of less than 25 MΩcm was used.

### Examples

50 g of pure water (de-ionized water, DIW) was put into a reactor, and internal dissolved oxygen of the pure water was sufficiently removed by bubbling with nitrogen for 30 minutes, and then a water-soluble polymer was added in an amount described in Table 1 below to prepare a cleaning solution. Then, 50 g of the lithium metal oxide described in Table 1 as a cathode active material was input into the cleaning solution, stirred for 10 minutes, and then filtered under reduced pressure using a Buchner funnel to form a cake. The obtained cake was dried at 100 to 150°C under vacuum for 20 hours, and classified by a 325 mesh to obtain final cathode active material particles.

### Comparative examples

Substantially the same process as in the examples was performed except that the water-soluble polymer in pure water was not used as the cleaning solution.

**[TABLE 1]**

| Section | Lithium metal oxide particle | | Water-soluble polymer | |
|---|---|---|---|---|
| | Composition | Added weight (wt. %) | Type | Added weigh t (wt. % ) |
| Example 1 | Li [Ni_{0.83}Co_{0.11}Mn_{0.06}]O₂ | 100 | Poly (diallyldimethyl ammonium chloride) | 1 |
| Example 2 | Li [Ni_{0.83}Co_{0.11}Mn_{0.06}]O₂ | 100 | Poly (acrylamide-co-acrylic acid) | 1 |
| Example 3 | Li [Ni_{0.83}Co_{0.11}Mn_{0.06}]O₂ | 100 | Poly (diallyldimethyl ammonium chloride) | 3 |
| Example 4 | Li [Ni_{0.83}Co_{0.11}Mn_{0.06}]O₂ | 100 | Poly (diallyldimethyl ammonium chloride) | 0.2 |
| Example 5 | Li [Ni_{0.83}Co_{0.11}Mn_{0.06}]O₂ | 100 | Poly (diallyldimethyl ammonium chloride) | 1.5 |
| Example 6 | Li [Ni_{0.83}Co_{0.11}Mn_{0.06}]O₂ | 100 | Poly (diallyldimethyl ammonium chloride) | 0.5 |
| Compara tive Example 1 | Li [Ni_{0.83}Co_{0.11}Mn_{0.06}]O₂ | 100 | none | 0.0 |
| Compara tive Example 2 | Li [Ni_{0.83}Co_{0.11}Mn_{0.06}]O₂ | 100 | Poly (diallyldimethyl ammonium chloride) | 0.1 |
| Compara tive Example 3 | Li [Ni_{0.83}Co_{0.11}Mn_{0.06}]O₂ | 100 | Poly (diallyldimethyl ammonium chloride) | 3.5 |

### Experimental example

### (1) SEM image analysis

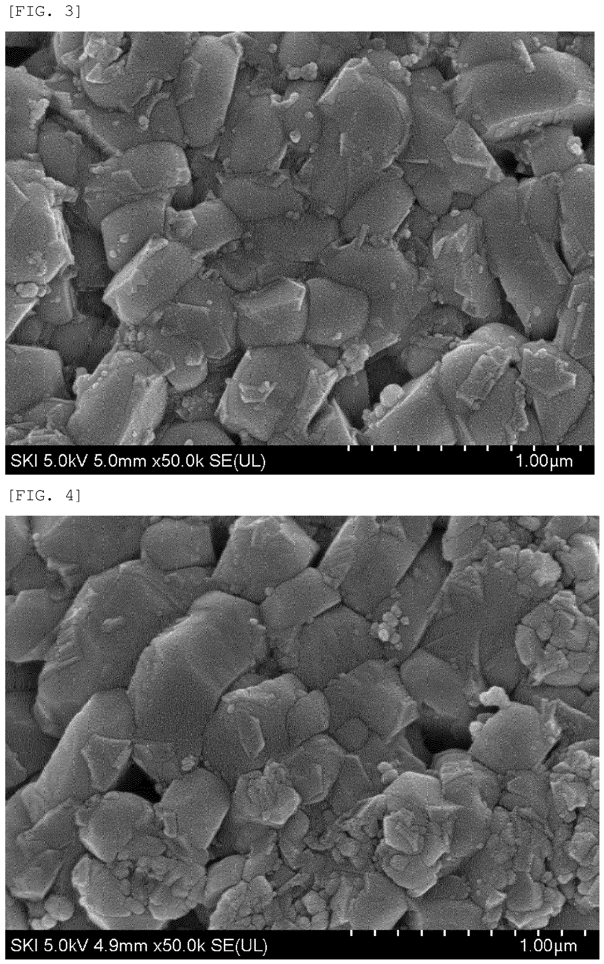

FIG. 3, FIG. 4 and FIG. 5 are scanning electron microscopy (SEM) images of the cathode active materials for a secondary battery prepared in Example 1, Example 2 and Comparative Example 1, respectively.

Referring to the SEM images, it can be confirmed that the cathode active materials of Examples 1 and 2 form a secondary particle structure in which the water-soluble polymer is concentrated and agglomerated between the particles, compared to the cathode active material of Comparative Example 1.

### (2) Evaluation of battery properties

### 2-1) Manufacture of secondary battery

A slurry was prepared by mixing each of the cathode active material particles prepared in the examples and comparative examples, carbon black as a conductive material, and polyvinylidene fluoride (PVdF) as a binder in a weight ratio of 92:5:3. The prepared slurry was uniformly applied to an aluminum foil having a thickness of 15 µm, and was vacuum-dried at 130°C to prepare a cathode for a lithium secondary battery.

An electrode assembly was formed using the cathode, a lithium foil as a counter electrode, and a porous polyethylene film (thickness: 21 µm) as a separator, then using the formed electrode assembly and a liquid electrolyte obtained by dissolving LiPF₆ at a concentration of 1.0M in a solvent in which ethylene carbonate and ethylmethyl carbonate are mixed in a volume ratio of 3:7, a battery cell having a coin half-cell shape was manufactured according to the conventionally known manufacturing process, followed by performing an evaluation at a voltage of 3.0 V to 4.3 V.

### 2-2) Measurement of initial charge/discharge amount

Charging (CC/CV 0.1C 4.3 V 0.05CA CUT-OFF) and discharging (CC 0.1C 3.0 V CUT-OFF) were performed once on the battery cells according to the examples and comparative examples, then initial charge capacity and discharge capacity were measured (CC: constant current, CV: constant voltage).

### 2-3) Measurement of initial efficiency

The initial efficiency was measured by a percentage value obtained by dividing the initial discharge amount measured in 2-2) by the initial charge amount.

### 2-4 Evaluation of rate characteristic

Charging (CC/C V 0.1C 4.3 V 0.005C CUT-OFF) and discharging (CC 0.1C 3.0 V CUT-OFF) were performed 5 times on the battery cells according to the examples and comparative examples, then charging (CC/C V 0.1C 4.3 V CUT-OFF) and discharging (CC 2.0C 3.0 V CUT-OFF) were performed once again for evaluating rate properties. The rate characteristic was evaluated by dividing the 2.0C discharge capacity by the 0.1C discharge capacity of the cycle immediately before the 2.0C discharge was performed, then converting it into a percentage (%).

### 2-5) Measurement of capacity retention rate

Charging (CC/CV 0.5C 4.3V 0.05CA CUT-OFF) and discharging (CC 1.0C 3.0V CUT-OFF) were repeatedly performed 160 times on the battery cells according to the examples and comparative examples, then discharge capacities at each cycle were measured.

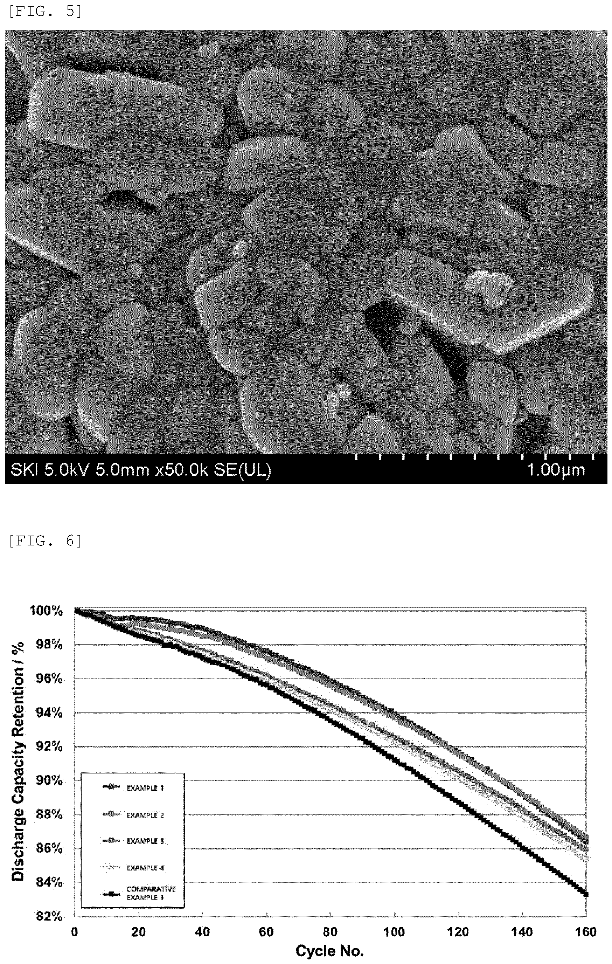

As shown in FIG. 6, in the case of the cathode active materials of Examples 1 to 4 including the water-soluble polymer exhibit remarkably excellent capacity retention rate, compared to Comparative Example 1 which does not include the water-soluble polymer.

Meanwhile, a life-span retention rate was evaluated by a percentage of a value obtained by dividing the discharge capacity measured at 160th time by the discharge capacity at 1st time.

### 2-6) Measurement result

The measured values according to the above-described experimental examples are shown in Table 2 below.

**[TABLE 2]**

| Section | LiOH | Li₂CO₃ | Li/M | Initial charge amount | Initial discharge amount | Initial efficien cy | 1c capacity | Rate charact eristic | Life-span@16 0th |
|---|---|---|---|---|---|---|---|---|---|
| | ppm | ppm | - | mAh/g | mAh/g | % | mAh/g | % | % |
| Example 1 | 1940 | 1410 | 1.003 | 226.8 | 201.5 | 88.8% | 167.5 | 83.1% | 87 |
| Example 2 | 1940 | 1510 | 1.004 | 226.1 | 201.2 | 89.0% | 166.8 | 82.9% | 87 |
| Example 3 | 1810 | 1980 | 1.009 | 224.8 | 198.3 | 88.2% | 164.1 | 83.0% | 86 |
| Example 4 | 1750 | 1390 | 1.004 | 226.1 | 201.6 | 89.2% | 167.0 | 82.8% | 85 |
| Example 5 | 1970 | 1580 | 1.005 | 225.6 | 200.3 | 88.8% | 166.7 | 83.2% | 87 |
| Example 6 | 1780 | 1420 | 1.004 | 225.8 | 201.5 | 89.2% | 167.3 | 83.0% | 86 |
| Comparative Example 1 | 2020 | 1370 | 1.004 | 225.7 | 198.4 | 87.9% | 164.3 | 82.8% | 83 |
| Comparative Example 2 | 2000 | 1400 | 1.003 | 225.7 | 199.5 | 88.4% | 165.2 | 82.8% | 83 |
| Comparative Example 3 | 2010 | 2350 | 1.008 | 223.9 | 196.9 | 87.9% | 162.1 | 82.3% | 82 |

Referring to Table 2, Comparative Example 2 showed a tendency that the life-span characteristic was decreased due to the insufficient coating amount, and Comparative Example 3 showed a tendency that the initial capacity was reduced due to the excessive coating amount, and the life-span characteristic was reduced due to an increase in resistance, as well as an amount of titrated Li₂CO₃ was also increased compared to Example 1

As compared with Comparative Examples 1 to 3, in the case of Examples 1 to 6, in which the cleaning process was performed using the cleaning solution including the above-described water-soluble polymer, excellent initial charge amount, initial discharge amount, initial efficiency, 1C capacity, rate characteristic and capacity retention rate during life-span were obtained by minimizing damage to the surface of lithium metal oxide.

## Claims

1. A cathode active material for a lithium secondary battery comprising:
a lithium metal oxide particle core part; and
a water-soluble polymer coating layer configured to cover at least a portion of the core part,
wherein the water-soluble polymer comprises at least one of a cationic polymer (polycation) and an anionic polymer (polyanion) .

2. The cathode active material for a lithium secondary battery according to claim 1, wherein the core part comprises a lithium metal oxide secondary particle, and the water-soluble polymer is distributed at a boundary between lithium metal oxide primary particles.

3. The cathode active material for a lithium secondary battery according to claim 1, wherein the cationic polymer comprises a repeating unit of Structural Formula 1 below: 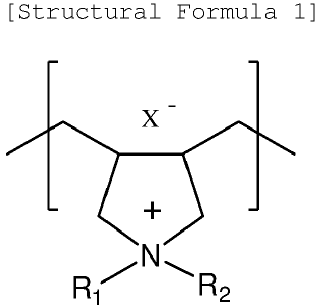 (In Structural Formula 1, R₁ and R₂ are each independently a hydrogen atom, or a hydrocarbon group having 1 to 5 carbon atoms, R₁ and R₂ can be bonded to each other to form a ring, and X is any one of halogen atoms).

4. The cathode active material for a lithium secondary battery according to claim 1, wherein the cationic polymer comprises a repeating unit of Structural Formula 2 below:

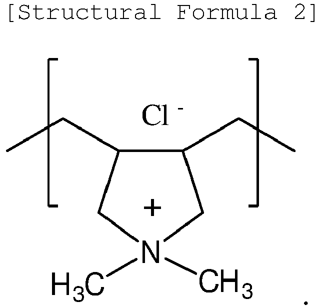

5. The cathode active material for a lithium secondary battery according to claim 1, wherein the anionic polymer comprises a repeating unit of Structural Formula 3 below: 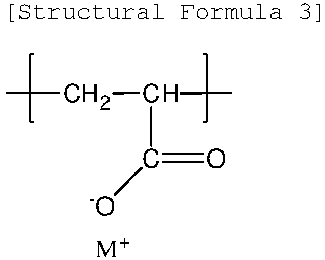 (In Structural Formula 3, M is any one of alkali metal elements).

6. The cathode active material for a lithium secondary battery according to claim 1, wherein the lithium metal oxide particle comprises a lithium nickel-based metal oxide represented by Formula 1 below:
[Formula 1] LiₓNi_{y}M_{1-y}O₂
(In Formula 1, x and y are in a range of 0.9<x<1.2, y≥0.5, respectively, and M is at least one element selected from the group consisting of Co, Mn, Al, Zr, Ti, B, Mg and Ba).

7. The cathode active material for a lithium secondary battery according to claim 6, wherein, in Formula 1, y is in a range of 0.6≤y≤0.93.

8. The cathode active material for a lithium secondary battery according to claim 6, wherein, in Formula 1, M includes Co and Mn.

9. The cathode active material for a lithium secondary battery according to claim 6, wherein the lithium metal oxide particle comprises a doping or coating including at least one of Al, Zr and Ti.

10. A method of manufacturing a cathode active material for a lithium secondary battery, the method comprising:
preparing a lithium metal oxide particle; and
washing the lithium metal oxide particle with a cleaning solution comprising a water-soluble polymer,
wherein the water-soluble polymer comprises at least one of a cationic polymer (polycation) and an anionic polymer (polyanion) .

11. The method according to claim 10, wherein the water-soluble polymer is added in an amount of 0.2 to 3 wt.% based on a total weight of the lithium metal oxide particle.

12. The method according to claim 10, further comprising mixing the lithium metal oxide particle with at least one of Al₂O₃, ZrO₂ and TiO₂ and performing a heat treatment to form a coating before the washing the lithium metal oxide particle with the cleaning solution.

13. A cathode comprising a cathode active material layer comprising the cathode active material for a lithium secondary battery according to claim 1; and
an anode disposed to face the cathode.
